# EUROPEAN PATENT SPECIFICATION

(11) **EP 1 420 572 B1**
(45) Date of publication and mention of the grant of the patent: **19.01.2005**
(21) Application number: 02360313.7
(22) Date of filing: 14.11.2002
(51) Int. Cl.: H04M 7/00

(54) **Call establishment method**
Verfahren zum Aufbau einer Verbindung
Procédé d'établissement d'appel

(43) Date of publication of application: 19.05.2004
(73) Proprietor: ALCATEL, 75008 Paris (FR)
(72) Inventor: Orlamünder, Harald, Dipl.-Ing., 71254 Ditzingen (DE); Stahl, Uwe, Dipl.-Ing., 71229 Leonberg (DE); Lautenschlager, Wolfgang, Dipl.-Ing., 71287 Weissach-Flacht (DE)
(74) Representative: Rausch, Gabriele, Dr.

(56) References cited:
- EP-A- 1 071 246
- US-A1- 2001 038 624
- US-B1- 6 275 490
- US-B1- 6 282 281
- US-B1- 6 324 264
- US-B1- 6 337 858
- HUBAUX J-P ET AL: "THE IMPACT OF THE INTERNET ON TELECOMMUNICATION ARCHITECTURES" , COMPUTER NETWORKS AND ISDN SYSTEMS, NORTH HOLLAND PUBLISHING. AMSTERDAM, NL, VOL. 31, NR. 3, PAGE(S) 257-273 XP000700322 ISSN: 0169-7552 * page 262, paragraph 3.1.1 * * figures 5,6 *
- LOW C: "THE INTERNET TELEPHONY RED HERRING" , HP LABORATORIES TECHNICAL REPORT, XX, XX, NR. 96/98, PAGE(S) 1-15 XP002043669 * page 7, paragraph 6.1 - page 12, paragraph 6.7 *

## Description

The invention relates to a method for establishing a communication connection between a calling subscriber terminal and a called subscriber terminal. Further, the invention relates to a terminal for a communication network, wherein the terminal comprises a first function element for establishing circuit switched connections to called subscriber terminals over the communication network. Further, the invention relates to a server for the provisioning of services to calling subscriber terminals of a communication network, wherein the calling subscriber terminals are connected over the communication network with called subscriber terminals.

Today, different addressing mechanisms are used for IP telephony, also known as Voice over Internet Protocol (VolP), and for classical PSTN telephony (PSTN= Public Switched Telephone Network).

For PSTN telephony, E.164 numbers are used.

IP telephony uses the internet protocol to transmit voice packets over an IP network. There are two competing standardised protocols for VolP operations, ITU-T H.323 and IETF Session Initiation Protocol (SIP). These two protocols describe the signalling and the control of multimedia conferences over packet based networks by different ways. Further, there is following way to resolve an address in an IP network: A domain name server is used to translate an input uniform resource locator or uniform resource identifier into an IP address. The domain name servers are arranged in a hierarchical structure. If a domain name server receives an address query that it cannot resolve, it will typically return the address of a higher level domain name server that may be able to resolve the address or forward the query to this higher level domain name server.

With introduction of IP telephony it becomes necessary that calls originating in a PSTN network and destined for an IP subscriber must be translated from the E.164 number entered by the PSTN subscriber to an IP address that is usable in the IP network. A gateway function between the PSTN network and the IP network performs a protocol translation such as translation from Session Initiation Protocol (SIP) to Integrated Services User Part (=ISUP in the Signaling System 7). The gateway function performs a media conversion from packet-switched to circuit-switched transport protocols. Translating an E.164 number requires locating an appropriate gateway. This is not a simple address translation with global relevance, because each operator prefers to choose a gateway based on the operators local policy.

An alternative method for translating E.164 numbers into IP addresses is proposed by the ENUM Internet Engineering Task Force (EETF) working group.

This method uses the domain name server infrastructure to perform the address resolution, by supplying it with the E. 164 number converted into a DNS name. For example, the E.164 number 045678 may be converted to the domain name 8.7.6.5.4.0.. Since the domain name infrastructure is used, the address translation has a global relevance.

Consequently, an IP telephony subscriber can be addressed through a URL/URI or an E.164 number (URL = Uniform Resource Locator; URI= Uniform Resource Identifier). In contrast to this, a PSTN subscriber has to be addressed by an E.164 number.

US 6,337,858 B1 describes a communication system with telephones, a user client executed via computer, a WEB server, a OAM server and a CTI server. The user client communicates with the WEB server and initiates a call request to its telephone. On receipt of the request, the WEB server requests subscriber rules from the OAM server. After the rules are obtained, the WEB server sends information to the CTI server instructing the CTI server to call the user by placing a PSTN call to the telephone.

US 6,324,264 B1 describes a communication system, wherein on the one hand telephone sets are connected with a PSTN network and on the other hand an interactive terminal device is connected via the Intemet with a public directory service. Further, the system has an IN platform providing an IP interface which is accessed by a WWW server to initiate a specific call establishment between telephone sets of the PSTN network.

The article "The impact of the Internet on telecommunication architectures", Hubaux J.-P., 11/02/99, pages 257 to 273 describes a PSTN telecommunication system equipped with a PSTN/Internet gateway. This gateway supports interactions between WEB-servers and IN service control points. While browsing a WEB page of a company, a user is in a position to initiate a click-to-dial, click-to-fax and ctick-to-fax-back service. The WEB server contacts via the PSTN/Internet gateway a service node of the PSTN network which initiates the respective call establishment functionalities.

The article "Internet Telephony Red Herring", Low C., 15-05-1996, pages 1 to 15 proposes to introduce a WEB SCP located between an TCP/IP network and a PSTN network. This WEB SCP translates telephone numbers into URLs (URL = Universal Resource Locator).

It is an object of the present invention to improve present call establishment methods.

The object of the present invention is achieved by a method for establishing a communication connection between a calling subscriber terminal and a called subscriber terminal connected to a circuit switched network, wherein the method comprises the steps of: entering, at the calling subscriber terminal, a request to access the called subscriber terminal; transferring an identification of the called subscriber to a mediation function element; transmitting said identification of the called subscriber from the mediation function element to an address translation server; transmitting a circuit switched network address of a terminal of the called subscriber from the address translation server to the mediation function element; and initiating a call establishment by passing said address from the mediation function element to a call handling function of the circuit switched network. The object of the present invention is further achieved by a terminal for a communication network, the terminal comprises: a first function element for establishing circuit switched connection to called subscriber terminals over the communication network; a second function element for receiving a request to access one or several called subscribers and for transferring an identification of a called subscriber to a mediation function element; and a mediation function element for receiving the identification of the called subscriber from the second function element, transmitting said identification to the called subscriber from the mediation function element to an address translation server, receiving from the address translation server a circuit switched network address of a terminal of the called subscriber, and initiating a call establishment by passing that address through the first function element to a call handling function of the circuit switched network. The object of the present invention is further achieved by a server for the provisioning of services to calling subscriber terminals of a circuit switched communication network, the calling subscriber terminals connected over the circuit switched communication network with called subscriber terminals, wherein the server comprises at least one mediation function element for: receiving requests from calling subscriber terminals, the requests transmitting at least one identification of a called subscriber from a subscriber terminal to the mediation function element; transmitting the identification of the called subscriber to an address translation server; receiving from the address translation server a circuit switched network address of a terminal of the called subscriber; and initiating a call establishment by passing that circuit switched network address to a call handling function of the circuit switched communication network.

Several advantages are achieved by the invention:

A comfortable user interface is provided to users of traditional telephone services. It becomes possible to introduce IP services while maintaining traditional circuit switched calls. It provides an efficient, cost-saving and powerful architecture to keep the attractions of classical circuit switched connections in the world of IP services.

Further advantages are achieved by the embodiments indicated by the dependent claims.

According to an preferred embodiment of the invention, the mediation function element is adapted for: receiving from the address translation server a list of associated service identifications returned from the address translation server on the transmission of the identification; receiving a selection command from the second function element selecting one of the service identifications; and sending a corresponding selection command to the address translation server which returns the switched network address of the called subscriber terminal. This functionality improves the user-friendiness of the system. It becomes for example possible to select a terminal out of a descriptive list of terminals, which makes it easier for the user to access the right terminal.

A terminal preferably has following architecture: the first function element is adapted for controlling circuit switched based services, the second function element is adapted for controlling IP based services and the mediation function element is adapted for mediating between IP based services and circuit switched based services. This kind of architecture ensures proper and efficient interaction between IP based services and circuited switched based services implemented in the same terminal. Further, the IP based user interface can be used to control circuit switched based services. This allows providing a powerful user interface for both, for IP based services and for circuit switched based services. Further, already developed function blocks can be reused, which results in cost-savings.

Further, following detailed architecture is proposed.

The second function element contains a function platform and one or several service applications interacting with the function platform via a first common API. The mediation function element interacts via the first common API with the function platform and via a second API with the first function element. The function platform may comprise a browser providing a graphical user interface. Further, the function platform may comprise means for providing a packet based data transfer service, for example a GPRS service (GPRS= General Packet Radio Service). This kind of architecture improves the interaction between IP based services and circuit switched based services and lowers the efforts for the development of service applications. Classical circuit switched based services may be addressed in the framework of this platform which lowers investments, increase the possibilities to create new services and increases the flexibility of the whole system.

According to a preferred embodiment of the invention, the terminal is a mobile phone supporting WEB-based services of the packet switch domain and circuit switch based services of the circuit domain. Preferably, the mobile phone has GPRS capability which is used for IP-based services. A further preferred form of terminal is an fixed network terminal (e. g. an ISDN terminal, an DSL terminal or a WEB-phone).

These as well as other features and advantages of the invention will be better appreciated by reading the following detailed description of presently preferred exemplary embodiments taken in a conjunction with accompanying drawings of which:
- Fig. 1: is a block diagram which shows a communication system comprising a terminal according to the invention.
- Fig. 2: is a block diagram which shows a communication system comprising a server according to the present invention.

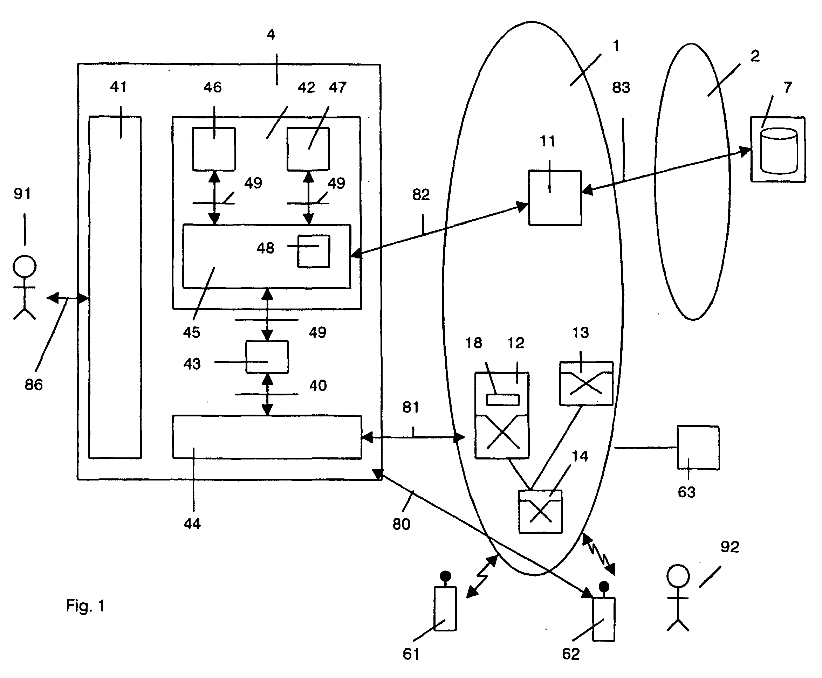

Fig. 1 shows two communication networks 1 and 2, several subscriber terminals 4, 61, 62 and 63, and a server 7. The terminals 4 and 62 are associated to subscribers 91 and 92, respectively.

The communication network 1 is a traditional circuit switched communication network. For example, the communication network 1 is formed by one or several mobile communication networks and one or several fixed communication networks assigned to different network operators. The mobile communication networks are, for example, GSM networks or UMTS networks (GSM= Global System for Mobile Communication; UMTS= Universal Mobile Telecommunications System). The fixed communication networks are for example ISDN networks or PSTN networks (ISDN= Integrated Services Digital Network; PSTN = Public Switched Telecommunication Network).

But, it is also possible that the communication network 1 does only contain a single fixed communication network or a single mobile communication network.

According to a preferred embodiment of the invention, the communication network offers to subscriber terminals in addition to circuit switched communication services also packet based data transfer services. For example, the communication network 1 is a GSM network which offers beside the traditional phone communication service a GPRS service (GPRS = General Packet Radio Service). The GPRS service enables the transfer of packet based data traffic over the air interface.

The communication network 2 is a packet based data network. According to a preferred embodiment of the invention, the communication network 2 is an IP-network (IP = Internet Protocol). This kind of networks uses the so-called IP protocol as level 3 protocol. For example, the communication network 2 is constituted by several interconnected physical networks using ATM or ETHERNET protocols as MAC protocols (ATM = Asynchronous Transfer Mode; MAC = Media Access Control) and the TCP/IP protocol stack as higher level protocols. The communication network 2 may be the Internet.

The communication network 1 comprises a plurality of exchanges interconnecting the subscriber terminals connected with the communication network 1. Figure 1 shows three exchanges 12, 13 and 14. Further, the communication network 1 comprises one or several gateways which enable an interconnection between the communication networks 1 and 2. Figure 1 shows a gateway 11, which performs gateway functionalities for a packet based data transfer service offered by the communication network 1 to subscriber terminals. For example, the gateway 11 routs packets, which exchanged via the GPRS service with subscriber terminals of the communication network 1, to the communication network 2.

But, it is also possible that the gateway 11 is formed by an internet access gateway providing internet access services for dialed up circuit switched connections or for data traffic exchanged via ADSL, DSL, SDSL or SHDSL services (ADSL = Asynchronous Digital Subscriber Line; DSL = Digital Subscriber Line; SDSL = Symmetrical Single-Pair High-Bitrate Digital Subscriber Line; SHDSL = Single-Pair High-Speed Digital Subscriber Line). Dial up connections may base on ISDN or POT network access services (POT = Plain Old Telephone).

The terminals 4, 61 and 62 are mobile phones. The terminal 63 is a fixed telephone set.

The terminal 4 is a GSM mobile phone with GPRS capability. It is formed by an electronic circuit comprising one or several microprocessors and an high frequency radio part, an antenna, a battery pack, and input and output means, for example a keyboard, a TFT display (TFT = Thin Film Transistor), a microphone, a loudspeaker, and a digital camera. Further, the terminal 4 comprises a plurality of application programs executed by the one or several microprocessors of the hardware platform of the terminal 4. The functions of the terminal 4 are mainly provided by the execution of these software programs on the hardware platform of the terminal 4.

From functional point of view, terminal 4 comprises an input/output unit 41, two functional elements 42 and 44 and a mediation function element 40.

The input/output means 41 are formed by the above described input/output means (keyboard, display...) and the associated hardware and software driver elements.

The function element 44 comprises the functionalities for establishing a circuit switched connections to called subscriber terminals of the communication network 1. For example, it comprises all functionalities to handle the GSM telephone service. It exchanges signalling messages (MSC = mobile switching center) for establishing and releasing circuit switched connections with the presently associated MSC via the air interface.

For example, the exchange 12 is the presently associated MSC. The exchange 12 comprising a call handling function 18 responsible for the connection between the terminal 4 and the exchange 12. According to the signaling messages exchanged between the terminal 4 and the exchange 12, the call handling function 18 establishes and releases circuit switched connections connecting the terminal 4 with other subscriber terminals of the communication network 1.

The function element 42 comprises functionalities for exchanging data with the communication network 1via a packet based data transfer service. Further, it comprises functionalities to offer following service. If it receives a specific kind of service request requesting the establishment of a circuit switched connection to one or several called subscribers, it transfers an identification of the called subscriber to the mediation function element 43.

The mediation function element 43 comprises following functionalities.

If it receives the identification of the called subscriber from the function element 42, it transmits the identification of the called subscriber to the addressed translation server 7. This is preferably done by using the packet based data transfer service offered by the function element 42.

Further, it is possible that the mediation function element 43 changes the encoding of the identification, converts the data format of the identification or attach additional information to the identification. For example, it changes the encoding of an identification from a hexa-decimal code to an ASCI code.

When it receives from the address translation server 7 a circuit switched network address of a terminal of the called subscriber, it initiates a call establishment by passing the address through the function element 44 to a call handling function of the communication network 1. For example, the function element 44 sends a signaling message which comprises the circuit switched network address of the terminal 62 to the exchange 12. The signaling message requests the establishment of a circuit switched connection between the terminal 4 and the called subscriber terminal 62 indicated by the circuit switched network address.

According to a preferred embodiment of the invention, the function elements 42 and 44 and the mediation function element 43 have following detail implementation:

The function element 44 comprises all functionalities for controlling circuit switched based services.

The function element 42 comprises all functionalities for controlling IP based services. From functional point of view, it has a function platform 45 and one or several service applications. Fig. 1 shows two service applications 46 and 47 of these service applications. But, it is also possible that the function element 42 does only comprise the function platform 45 and does not comprise any service application.

The service applications 46 and 47 interact with the function platform 45 via an API 49 (API = Application Program Interface). Further, the mediation function 43 interacts with the function platform 45 via the same API, which means over the API 49.

The function platform 45 comprises a browser providing a graphical user interface. Further, the function platform 45 comprises the functions 48, which provides a packet based data transfer service.

For example, the function platform 45 comprises a browser application, for example a WAP browser or a WWW browser (WAP = Wireless Application Protocol; WWW = World Wide Web). This browser application controls the input/output means 41 and provides a graphical user interface 86 to the user 91. The graphical user interface 86 is used to control services offered by the terminal 4. Further, the function platform 45 comprises all the functionalities which offer communication services to the browser application. Through these services, it becomes possible for the browser application to exchange information with terminals and servers connected with the communication network 2.

For example, the TCP/IP protocol stack is used to transfer HTML or XML content (HTML = Hypertext Markup Language; XML = Extended Markup Language) between the browser application of the function platform 45 and interacting applications executed by terminals or servers of the communication network 2. The service applications 46 and 47 are plug-in applications interconnected and controlled by the browser application of the function platform 45.

But, it is also possible that the function platform 45 comprises an engine for executing one or several platform independent programming languages (for example a Java Virtual Machine) and the service applications 46 and 47 are formed by application software encoded in this programming language. Even in this case, the application services are controlled by the browser application of the function platform 45 via the API 49.

The mediation function element 43 comprises functionalities for mediating between IP based services and circuit switched based services. It interacts via the common API 49 with the function platform 45 and via an API 40 with the function element 44. The mediation function 43 may be a browser plug-in configured for the browser application of the function platform 45. As the other plug-ins 46 and 47, it offers one or several services to other service applications based on the function platform 45. It plays a mediation function role which makes services of the function element 44 visible within the domain of the IP or packet based services.

For example, the service applications 46 and 47 offer a range of mobile IP based services to the subscriber 91. It becomes possible for these service applications to access circuit switched services during service provisioning of IP based services. The mediation function 43 plays the role of a "dummy" SIP plug-in: It provides to the subscriber 91 a SIP kind of service (SIP = Session Initiation Protocol). This service is provided within the framework of a WWW graphical user interface to the subscriber 91.

Further, the function platform offers WAP, IP or WWW communication services to the mediation function 43. These services are used to establish a WAP, IP or WWW connection between the mediation function element 43 and the address translation server 7.

In the following, a preferred embodiment of the invention is described by hand of a "hyperlink with SIP-scheme service" offered by the mediation function element 43.

The function platform 45 displays a HTML page (HTML = Hypertext Markup Language) or an XML page (XML = Extended Markup Language) to the subscriber 91. Beside other kind of information, the page displays a hyperlink identifying the subscriber 92.

For example, the hyperlink has the following form: SIP://maier@alcatel.de.

This hyperlink may have been entered by the subscriber 91 (for example by the keyboard). Further, it is possible that this hyperlink is displayed as part of a HTML page received from one of the service applications 46 or 47 or from a server or terminal of the communication network 2.

The subscriber 91 selects the hyperlink, for example clicks on the hyperlink. The function platform 45 interprets this selection as request to access the called subscriber terminal associated to this hyperlink. The function platform 45 transfers this hyperlink representing an identification of the called subscriber to the mediation function element 43. The mediation function element 43 establishes a WWW connection over the gateway 11 to the server 7 of the communication network 2. It uses the communication service offered by the function platform 45 to establish this connection constituted by a connection 82 between the terminal 4 and the gateway 11 (e. g. GPRS connection) and a connection 83 between the gateway 11 and the server 7 (e. g. IP connection). The gateway 11 checks the internet access rights and properties of the terminal 4. Then, it establishes the connection 83. Now, WWW-messages are exchanged between the mediation function element 43 and the server 7.

The server 7 is an E.164 directory server which translates URUURI into an associated E.164 number (URL = Uniform Resource Locator; URI = Uniform Resource Identifier).

The mediation function element 43 transmits the identification of the called subscriber, which is the above described hyperlink, over the established WWW connection to the address translation server 7. The server 7 translates this hyperlink into an E.164 number, which is a circuit switched network address. It replies a WWW message containing this E.164 number.

For example, the circuit switched network address is the E.164 number of the terminal 62.

Further, the mediation function element 43 triggers a call establishment function offered by the function element 44 via the API 40. It transfers the received E.164 number to this service of the function element 44. This triggers the function element 44 to send a corresponding signaling message to the exchange 12. This signaling message causes the establishment of a circuit switched connection 80 between the terminal 4 and the terminal 62.

The above described call establishment method may be also applied on hyperlinks according to the scheme proposed by the ENUM Internet Engineering Task Force (IETF working group):

The call establishment is triggered by selecting a "contact", for example by a click pointing to a "contact", instead of a hyperlink. Clicking the contact causes the mediation function element to query the ENUM DNS (DNS = Domain Name Server) which returns all possibilities to contact the identified contact person. The mediation function element 43 displays, via the graphical user interface provided by the function platform 45, all available ways to contact the contact person. For example, it displays following contact on the screen of the terminal 4:
Select:
SIP MM
MAIL...
PHONE-1
PHONE-2
...

The subscriber 91 selects one of these contacts out of the list. In the case of selecting "PHONE-x", the mediation function element accesses the server 7, requests the associated E.164 number and initiates the call establishment by accessing the function element 44 via the API 40 as already described above.

But, it is also possible that the associated E.164 number was already submitted together with the contacts to the mediation function 43. In this case, no further access to the server 7 is necessary and the mediation function 7 may directly initiate the call establishment by triggering the call establishment function of the function element 44 as described above.

This method makes it possible to alternatively contact somebody via circuit switched calls in the circuit switched domain or SIP based VolP calls in the packet switched domain.

This scenario also offers the possibility to extend the ENUM service in such a way, that it returns several applicable telephone numbers and than querying just one number. This needs an extension of the URL, for example by defining a "scope". The "scope" may be: home, business, mobile number personal, mobile number business, personal number...

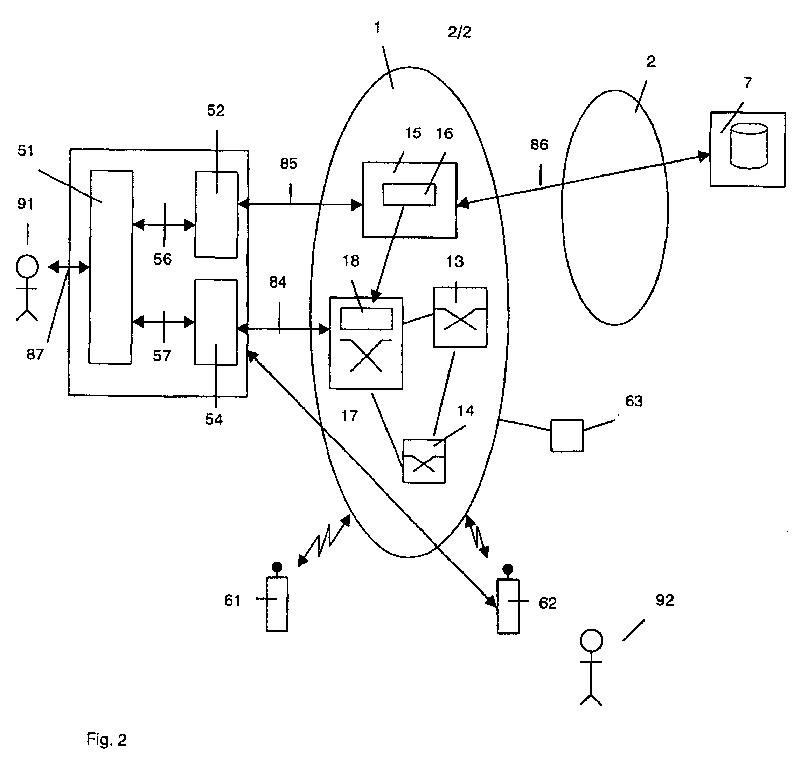

Further embodiments of the invention are now described by hand of fig. 2.

Fig. 2 shows the communication networks 1 and 2, the terminals 5, 61, 62 and 63, and the subscribers 91 and 92.

The communication network 1 is constituted by a communication network as described according to fig. 2. The communication network 1 comprises several exchanges. Fig. 2 shows the exchanges 13 and 14 and an exchange 17 with the call handling function 18.

The terminal 5 is a mobile phone, but it is also possible that the terminal 5 is a telephone set for a fixed network, for example an ISDN terminal.

In principle, the terminal 5 may be configured as the terminal 4 of fig. 1.

From functional point of view, the terminal 5 comprises input and output means 51 and functional elements 52 and 54.

The input/and output means may be formed by the input/and output means 41 of fig. 1 and offers a user interface 87 to the subscriber 91.

The function element 54 is configured as the function element 44 of fig. 1.

But, it is not necessary that the function element 54 offers the API 40. Further, it is possible that the function element 54 does only communicate via an interface 57 with the input/output means 51, which means that it is only controllable by the subscriber 91.

The function element 52 is formed by the functional element 42 of fig. 1. But, it is also possible that it has a much more simple functionality, for example does not provide the function platform 45.

The server 15 of the communication network 1 is formed by one or several interconnected computers and a plurality of software programs executed by these computers. From functional point of view, the server 15 provides at least one mediation function element to terminals of the communication network 1. For example, fig. 2 shows a mediation function element 16.

The mediation function element 16 receives requests from calling subscribers; each request transmits at least one identification of a called subscriber from a subscriber terminal to the mediation function element 16.

For example, the function element 52 of the terminal 5 contacts the mediation function element 16 over a GPRS connection or over any other kind of packet based data connection. Further, it is possible that the terminal 5 contacts the function element 16 over any other kind of connection capable to transport data packets.

The mediation function element 16 receives a request from the function element 52 which comprises an identification of a called subscriber, for example an hyperlink, the address, the name etc. of the subscriber.

The mediation function element 16 contacts an associated address translation server. If it receives a SIP-based identification, it contacts a SIP E.164 directory server.

For example, it establishes a connection 86 to the server 7, transmits the identification of the called subscriber to the server 7 and receives from the server 7 the E.164 number of the terminal 92. As already mentioned in conjunction with fig. 1, it is also possible that the mediation function element 16 exchanges further information with the terminal 5 to select one of several contacts received from the server 7. This embodiment of fig. 1 may be fully applied on this kind of architecture.

Then, the mediation function element 16 initiates the establishment of a call between the terminal 5 and the subscriber terminal of the communication network 1, which is specified by the received circuit switched network address. It transfers the received circuit switched network address to the call handling function 18 and requests a call establishment between the terminal 5 and the terminal addressed by this circuit switched network address.

For example, the mediation function element 16 sends a corresponding command message over an IN-interface or via any other kind of call control protocol (e. g. SIP via signaling gateway) to the exchange 17.

Further, the server 15 may perform an authorization of terminals (for example by help of the already existing authorization procedures within mobile telecommunication networks) and a routing of received messages to associated mediation function element.

## Claims

1. A terminal for a communication network (4), the terminal (4) comprising a first function element (44) for establishing circuit switched connections (80) to called subscriber terminals (61 to 63) over the communication network (1), and a second function element (42) for receiving a request to access one or several called subscriber terminals (61, 62, 63),
**characterized in**
**that** the second function element (42) is adapted to transfer an identification of a called subscriber (92) to a mediation function element (43) of the terminal (4),
**that** the terminal (4) comprises a mediation function element (43) for receiving the identification of the called subscriber (92) from the second function element (42), the terminal (4) being further adapted to transmit said identification of the called subscriber (92) from the mediation function element (43) to an address translation server (7), receive from the address translation server (7) a circuit switched network address of a terminal of the called subscriber (92) and initiate a call establishment by passing said address through the first function element (44) of the terminal (4) to a call handling function (18) of a circuit switched network (1),
**that** the first function element (44) is adapted for controlling circuit switched based services, the second function element is adapted for controlling IP based services and the mediation function element (43) is adapted for mediating between IP based services and circuit switched based services,
**that** the second function element (42) contains a function platform (45) and one or several service applications (46, 47) interacting with the function platform (45) via a first common API (49), and
**that** the mediation function element (43) is adapted to interact via the first common API (49) with the function platform (45) and via a second API (40) with the first function element (44).

2. The terminal according to claim 1,
**characterized in**
**that** the mediation function element (43) is adapted for: receiving from the address translation server (7) a list of associated service identifications returned from the address translation server (7) on the transmission of the identification; receiving a selection command from the second function element (42) selecting one of the service identifications; and sending a corresponding selection command to the address translation server (7) which returns the circuit switched network address of the called subscriber terminal (62).

3. The terminal according to claim 1,
**characterized in**
**that** the function platform (45) comprising means (48) for providing a packet based data transfer service.

4. The terminal according to claim 1,
**characterized in**
**that** the function platform (45) comprising a browser providing a graphical user interface.

5. The terminal according to claim 1,
**characterized in**
**that** the terminal (4) is a mobile phone terminal.

6. The terminal according to claim 1,
**characterized in**
**that** the terminal is an ISDN terminal.

7. A method for establishing a communication connection (80) between a calling subscriber terminal (4) and a called subscriber terminal (61, 62, 63) connected to a circuit switched network (1), the method comprising the step of entering, at the calling subscriber terminal (4), a first request (86, 87) to access the called subscriber terminal (62);
**characterized in**
**that** the method comprises the further steps of:
transferring an identification of a called subscriber (92) from a second function element (42) of the terminal (4) to a mediation function element (43) of the terminal (4), the second function element controls IP based services and contains a function platform (45) and one or several service applications (46, 47) interacting with the function platform (45) via a first common API (49), and the mediation function element (43) mediates between IP based services and circuit switch based services controlled by a first function element (44) and interacts via the first common API (49) with the function platform (45) and via a second API (40) with the first function element (44);
transmitting said identification of the called subscriber from the mediation function element (43) of the terminal (4) to an address translation server (7);
transmitting a circuit switched network address of a terminal of the called subscribers (92) from the address translation server (7) to the mediation function element (43) of the terminal (4); and
receiving, at the mediation function element (43) of the terminal, from the address translation server (7) a circuit switched network address of a terminal of the called subscriber (92) and
initiating a call establishment by passing said address from the mediation function element (43, 16) through the first function element (44) of the terminal to a call handling function (18) of the circuit switched network (1) (1).

## Patentansprüche

1. Ein Endgerät für ein Kommunikationsnetz (4), wobei das Endgerät (4) ein erstes Funktionselement (44) zum Aufbau von leitungsvermittelten Verbindungen (80) zu angerufenen Teilnehmerendgeräten (61 bis 63) über das Kommunikationsnetz (1) und ein zweites Funktionselement (42) zum Empfang einer Anforderung zum Zugriff auf einen oder mehrere angerufene Teilnehmer-Endgeräte (61, 62, 63) enthält,
**dadurch gekennzeichnet,**
**dass** das zweite Funktionselement (42) so angepasst ist, dass es eine Kennung eines angerufenen Teilnehmers (92) an ein Vermittlungs-Funktionselement (43) des Endgerätes (4) überträgt,
**dass** das Endgerät (4) ein Vermittlungs-Funktionselement (43) zum Empfang der Kennung des angerufenen Teilnehmers (92) vom zweiten Funktionselement (42) enthält, wobei das Endgerät (4) weiterhin so angepasst ist, dass die Kennung des angerufenen Teilnehmers (92) vom Vermittlungs-Funktionselement (43) an einen Adressen-Umsetzungs-Server (7) sendet, von dem Adressen-Umsetzungs-Server (7) eine Adresse eines Endgerätes des angerufenen Teilnehmers (92) im leitungsvermittelten Netz empfängt und einen Rufaufbau auslöst, indem es die Adresse durch das erste Funktionselement (44) des Endgerätes (4) an eine Rufbearbeitungsfunktion (18) eines leitungsvermittelten Netzes (1) weiterleitet,
**dass** das erste Funktionselement (44) so angepasst ist, dass es auf Leitungsvermittlung basierende Dienste steuert, das zweite Funktionselement so angepasst ist, dass es auf IP basierende Dienste steuert und das Vermittlungs-Funktionselement (43) so angepasst ist, dass es zwischen auf IP basierenden und auf Leitungsvermittlung basierenden Diensten vermittelt,
**dass** das zweite Funktionselement (42) eine Funktions-Plattform (45) und eine oder mehrere Dienst-Anwendungen (46, 47) enthält, die mit der Funktions-Plattform (45) über eine erste allgemeine API (49) interagieren, und
**dass** das Vermittlungs-Funktionselement (43) so angepasst ist, dass es über die erste allgemeine API (49) mit der Funktions-Plattform (45) und über eine zweite API (40) mit dem ersten Funktionselement (44) interagiert.

2. Das Endgerät gemäß Anspruch 1,
**dadurch gekennzeichnet,**
**dass** das Vermittlungs-Funktionselement (43) für folgendes angepasst ist: Empfang vom Adressen-Umsetzungs-Server (7) einer Liste von zugeordneten Dienst-Kennungen, die vom Adressen-Umsetzungs-Server (7) bei Übertragung der Kennung zurückgeliefert wird; Empfang eines Auswahl-Befehls vom zweiten Funktionselement (42), das eine der Dienst-Kennungen auswählt; und Senden eines entsprechenden Auswahl-Befehls an den Adressen-Umsetzungs-Server (7), der die Adresse des angerufenen Teilnehmerendgerätes (62) im leitungsvermittelten Netz zurückgibt.

3. Das Endgerät gemäß Anspruch 1,
**dadurch gekennzeichnet,**
**dass** die Funktions-Plattform (45) Mittel (48) enthält, um einen auf Paketen basierenden Datenübertragungs-Dienst bereitzustellen.

4. Das Endgerät gemäß Anspruch 1,
**dadurch gekennzeichnet,**
**dass** die Funktions-Plattform (45) einen Browser enthält, der eine grafische Benutzerschnittstelle bereitstellt.

5. Das Endgerät gemäß Anspruch 1,
**dadurch gekennzeichnet,**
**dass** das Endgerät (4) ein Mobiltelefon ist.

6. Das Endgerät gemäß Anspruch 1,
**dadurch gekennzeichnet,**
**dass** das Endgerät ein ISDN-Endgerät ist.

7. Ein Verfahren zum Aufbau einer Kommunikationsverbindung (80) zwischen einem anrufenden Endgerät (4) und einem angerufenen Endgerät (61, 62, 63), das an ein leitungsvermitteltes Netz (1) angeschlossen ist, wobei das Verfahren den Schritt der Eingabe am anrufenden Endgerät (4) einer ersten Anforderung (86, 87) zum Zugriff auf das angerufene Teilnehmerendgerät (62) umfasst;
**dadurch gekennzeichnet,**
**dass** das Verfahren weiterhin folgende Schritte umfasst: Übertragung einer Kennung eines angerufenen Teilnehmers (92) von einem zweiten Funktionselement (42) des Endgerätes (4) an ein Vermittlungs-Funktionselement (43) des Endgerätes (4), wobei das zweite Funktionselement auf IP basierende Dienste steuert und eine Funktions-Plattform (45) und eine oder mehrere Dienst-Anwendungen (46, 47) enthält, die mit der Funktions-Plattform (45) über eine erste allgemeine API (49) interagieren, und wobei das Vermittlungs-Funktionselement (43) gesteuert durch ein erstes Funktionselement (44) zwischen auf IP basierenden Diensten und leitungsvermittelten Diensten vermittelt und über die erste allgemeine API (49) mit der Funktions-Plattform (45) und über eine zweite API (40) mit dem ersten Funktionselement (44) interagiert;
Senden der Kennung des angerufenen Teilnehmers vom Vermittlungs-Funktionselement (43) des Endgerätes (4) an einen Adressen-Umsetzungs-Server (7);
Senden einer Adresse eines Endgerätes des angerufenen Teilnehmers (92) im leitungsvermittelten Netz vom Adressen-Umsetzungs-Server (7) an das Vermittlungs-Funktionselement (43) des Endgerätes (4); und
Empfang einer Adresse eines Endgerätes des angerufenen Teilnehmers (92) im leitungsvermittelten Netz am Vermittlungs-Funktionselement (43) des Endgerätes vom Adressen-Umsetzungs-Server (7) und
Auslösen eines Rufaufbaus durch Weitergabe der Adresse vom Vermittlungs-Funktionselement (43, 16) durch das erste Funktionselement (44) des Endgerätes an eine Rufbearbeitungsfunktion (18) des leitungsvermittelten Netzes (1).

## Revendications

1. Terminal pour un réseau de communication (4), le terminal (4) comprenant un premier élément fonctionnel (44) pour établir des connexions à commutation de circuits (80) vers des terminaux d'abonnés appelés (61 à 63) sur le réseau de communication (1) et un deuxième élément fonctionnel (42) pour recevoir une demande d'accès à un ou plusieurs terminaux d'abonnés appelés (61, 62, 63),
**caractérisé en ce que**
le deuxième élément fonctionnel (42) est adapté pour transférer une identification d'un abonné appelé (92) à un élément fonctionnel de médiation (43) du terminal (4),
le terminal (4) comprend un élément fonctionnel de médiation (43) pour recevoir l'identification de l'abonné appelé (92) du deuxième élément fonctionnel (42), le terminal (4) étant en outre adapté pour transmettre ladite identification de l'abonné appelé (92) de l'élément fonctionnel de médiation (43) à un serveur de transformation d'adresse (7), pour recevoir du serveur de transformation d'adresse (7) une adresse de réseau à commutation de circuits d'un terminal de l'abonné appelé (92) et pour lancer un établissement d'appel en passant ladite adresse par l'intermédiaire du premier élément fonctionnel (44) du terminal (4) à une fonction de gestion d'appel (18) d'un réseau à commutation de circuits (1),
le premier élément fonctionnel (44) est adapté pour contrôler des services à commutation de circuits, le deuxième élément fonctionnel est adapté pour contrôler des services IP, et l'élément fonctionnel de médiation (43) est adapté pour arbitrer des services IP et des services à commutation de circuits,
le deuxième élément fonctionnel (42) contient une plate-forme fonctionnelle (45) et une ou plusieurs applications de services (46, 47) interagissant avec la plate-forme fonctionnelle (45) par l'intermédiaire d'une première API (49) commune, et
l'élément fonctionnel de médiation (43) est adapté pour interagir par l'intermédiaire de la première API (49) commune avec la plate-forme fonctionnelle (45) et par l'intermédiaire d'une deuxième API (40) avec le premier élément fonctionnel (44).

2. Terminal selon la revendication 1,
**caractérisé en ce que**
l'élément fonctionnel de médiation (43) est adapté pour : recevoir du serveur de transformation d'adresse (7) une liste d'identifications de services associées renvoyée par le serveur de transformation d'adresse (7) lors de la transmission de l'identification ; recevoir une commande de sélection du deuxième élément fonctionnel (42) sélectionnant l'une des identifications de services ; et envoyer une commande de sélection correspondante au serveur de transformation d'adresse (7) qui renvoie l'adresse de réseau à commutation de circuits du terminal d'abonné appelé (62).

3. Terminal selon la revendication 1,
**caractérisé en ce que**
la plate-forme fonctionnelle (45) comprend des moyens (48) pour fournir un service de transfert de données à base de paquets.

4. Terminal selon la revendication 1,
**caractérisé en ce que**
la plate-forme fonctionnelle (45) comprend un navigateur fournissant une interface graphique utilisateur.

5. Terminal selon la revendication 1,
**caractérisé en ce que**
le terminal (4) est un terminal téléphonique mobile.

6. Terminal selon la revendication 1,
**caractérisé en ce que**
le terminal est un terminal RNIS.

7. Procédé pour établir une connexion de communication (80) entre un terminal d'abonné appelant (4) et un terminal d'abonné appelé (61, 62, 63) connectés à un réseau à commutation de circuits (1), le procédé comprenant l'étape d'entrée, au niveau du terminal d'abonné appelant (4), d'une première demande (86, 87) d'accès au terminal d'abonné appelé (62) ;
**caractérisé en ce que**
le procédé comprend les étapes supplémentaires consistant à :
transférer une identification d'un abonné appelé (92) d'un deuxième élément fonctionnel (42) du terminal (4) à un élément fonctionnel de médiation (43) du terminal (4), le deuxième élément fonctionnel contrôlant des services IP et contenant une plate-forme fonctionnelle (45) et une ou plusieurs applications de services (46, 47) interagissant avec la plate-forme fonctionnelle (45) par l'intermédiaire d'une première API (49) commune, et l'élément fonctionnel de médiation (43) arbitrant des services IP et des services à commutation de circuits contrôlés par un premier élément fonctionnel (44) et interagissant par l'intermédiaire de la première API (49) commune avec la plate-forme fonctionnelle (45) et par l'intermédiaire d'une deuxième API (40) avec le premier élément fonctionnel (44) ;
transmettre ladite identification de l'abonné appelé de l'élément fonctionnel de médiation (43) du terminal (4) à un serveur de transformation d'adresse (7) ;
transmettre une adresse de réseau à commutation de circuits d'un terminal des abonnés appelés (92) du serveur de transformation d'adresse (7) à l'élément fonctionnel de médiation (43) du terminal (4) ; et
recevoir, au niveau de l'élément fonctionnel de médiation (43) du terminal, du serveur de transformation d'adresse (7), une adresse de réseau à commutation de circuits d'un terminal de l'abonné appelé (92) ; et
lancer un établissement d'appel en passant ladite adresse de l'élément fonctionnel de médiation (43, 16) par l'intermédiaire du premier élément fonctionnel (44) du terminal à une fonction de gestion d'appel (18) du réseau à commutation de circuits (1).
